**Europäisches Patentamt**

(19) **European Patent Office**

**Office européen des brevets**

(11) Veröffentlichungsnummer: **0 007 975**
**B1**

(12) **EUROPÄISCHE PATENTSCHRIFT**

(45) Veröffentlichungstag der Patentschrift:
23.09.81

(51) Int. Cl.³: **E 04 B 1/76**, E 04 F 21/08

(21) Anmeldenummer: **79101490.5**

(22) Anmeldetag: **16.05.79**

(54) Vorrichtung zum bleibenden Verschalen von Flächen, insbesondere von Wänden oder Innendachflächen von Gebäuden mit Platten.

(30) Priorität: **29.07.78 DE 2833439**

(43) Veröffentlichungstag der Anmeldung:
**20.02.80 Patentblatt 80/4**

(45) Bekanntmachung des Hinweises auf die Patenterteilung:
**23.09.81 Patentblatt 81/38**

(84) Benannte Vertragsstaaten:
**AT CH FR GB NL SE**

(56) Entgegenhaltungen:

**DE-A-2 534 815**
**DE-B-2 654 600**
**US-A-3 548 453**
**US-A-3 991 842**

(73) Patentinhaber: **Fingerling, Karl-Heinz, Lange Strasse 20, D-3500 Kassel (DE)**

(72) Erfinder: **Fingerling, Karl-Heinz, Lange Strasse 20, D-3500 Kassel (DE)**

(74) Vertreter: **Walther, Horst, Dipl.-Ing., Wilhelmshöher Allee 275 Postfach 41 01 08, D-3500 Kassel (DE)**

»Vorrichtung zum bleibenden Verschalen von Flächen, insbesondere von Wänden oder Innendachflächen von Gebäuden mit Platten«.

Die Erfindung betrifft eine Vorrichtung zum bleibenden Verschalen von Flächen, insbesondere von Wänden oder Innendachflächen von Gebäuden, mit Platten zum Zwecke der Isolation mit Schaumstoff.

Es ist bereits vorgeschlagen worden, zur Erhöhung der Wärmeisolation von Fachwerkhäusern die einzelnen Gefache um eine gewisse Schichtdicke abzuschälen, dann eine Platte davorzusetzen und den so geschaffenen Hohlraum mit Schaumstoff auszuschäumen.

Da die Gefache unterschiedlich groß sind, müssen jeweils unterschiedlich große Platten vorgesetzt werden.

Der Erfindung liegt die Aufgabe zugrunde, eine Vorrichtung der eingangs erwähnten Art zu schaffen, mit der beliebig große Flächen verschalt werden können, ohne daß der Höhe nach eine Anpassung der Platten an die Gefachgrößen erforderlich ist.

Nach der Erfindung wird diese Aufgabe dadurch gelöst, daß die Vorrichtung aus einer Reihe von Traggestellen besteht, an denen jeweils eine Platte festlegbar ist und die Traggestelle miteinander sich gegenseitig abstützend gelenkig verbunden sind. Die Traggestelle können lösbar miteinander verbunden sein.

Nach der einen Ausführungsform -- die insbesondere zum Verschalen von Gefachen von Fachwerkhäusern gedacht ist — weist das Traggestell an der einen Seite eine Stützschiene und an der gegenüberliegenden Seite eine Stützzunge auf.

Bei in dieser Weise übereinander angeordneten Traggestellen greift die Stützzunge in die Stützschiene des nächsten Traggestells hakenartig ein. Dabei kann in der Stützschiene ein Schlitz vorgesehen sein, in den die Stützzunge einrasten kann.

Beim Verschalen der Gefache können soviele mit den Platten versehene Traggestelle übereinander unter gegenseitiger Abstützung angeordnet werden, bis das Gefach völlig abgedeckt ist.

Weiterhin können zur Befestigung der in dieser Weise angeordneten Traggestelle am Gefach Spannelemente an der Stützschiene, insbesondere in dem Schlitz, verschiebbar geführt sein. Diese Spannelemente sind in an sich bekannter Weise als hakenförmige einpreßbare Keilstücke ausgebildet, die in die Gefachbalken eindringen.

Zweckmäßig ist jedes Traggestell mit einem Griff versehen, so daß das Übereinandersetzen der einzelnen Traggestelle mit den daran befestigten Platten erleichtert ist.

Die an dem Traggestell befestigte Platte kann eine feuerhemmende Putzträgerplatte sein oder aber auch eine Außenfassadenplatte.

Nach einer anderen Ausführungsform — die insbesondere zum Verschalen von Außenwänden gedacht ist — sind die Traggestelle nach Art einer Kette gelenkig miteinander verbunden und ist die so gebildete Kette über Umlenkräder geführt, so daß ein Kettengestell entsteht. Dabei weist jedes Traggestell Klemm-Mittel od. dgl. auf, in die die Platten einsetzbar sind.

Dieses mit den Traggestellen versehene Kettengestell ist vorzugsweise selbst heb- und senkbar ausgebildet, indem beispielsweise ein derartiges Kettengestellt an einer Hebebühne od. dgl. angebracht ist.

Damit eine seitliche Begrenzung des durch die Platten gebildeten Hohlraumes geschaffen ist, ist beiderseits der Platten ein Band vorgesehen, das über Umlenkrollen geführt ist und dessen Ebene senkrecht zur Plattenebene steht. Dieses Band wird zusammen mit den Rollen von dem Kettengestell mitgehalten.

In der Zeichnung sind zwei beispielsweise Ausführungsformen dargestellt.

Fig. 1 zeigt ein Gefach eines Fachwerkhauses mit der erfindungsgemäßen Vorrichtung zum Verschalen in Ansicht;

Fig. 2 ist ein Schnitt gemäß der Linie II-II in Fig. 1;

Fig. 3 ist ein Schnitt gemäß der Linie III-III in Fig. 1;

Fig. 4 zeigt ein Anwendungsbeispiel der Vorrichtung im Zusammenhang mit der Isolation eines Innendaches;

Fig. 5 ist ein Schnitt gemäß der Linie V-V in Fig. 4;

Fig. 6 zeigt eine andere Ausführungsform;

Fig. 7, 8 und 9 zeigen die verschiedenen Möglichkeiten der Heb- und Senkbarkeit des Kettengestelles.

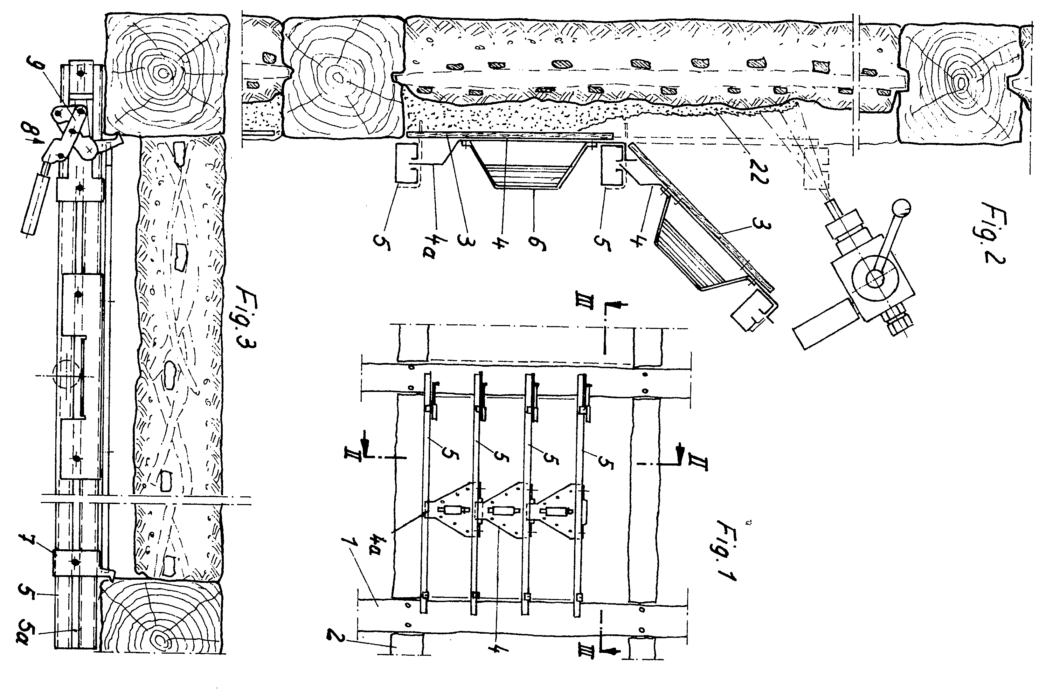

Wie die Fig. 1 zeigt, sind die Gefachbalken mit 1 bzw. 2 bezeichnet. Das so gebildete Fach wird mit Hilfe von Platten 3 verschalt, die jeweils an einem Traggestell 4 lösbar befestigt sind.

Im einzelnen ist die Ausbildung dabei so getroffen, daß das Traggestell 4 in Form einer Tragplatte ausgebildet ist, deren untere Seite abgewinkelt ist, so daß eine Stützzunge 4a entsteht. An der oberen Seite des Traggestelles 4 ist eine Stützschiene 5 angeordnet, die mit einem Schlitz 5a versehen ist.

Jedes Traggestell 4 besitzt darüber hinaus noch einen Handgriff 6, mittels welchem das Traggestell 4 zusammen mit der daran befestigten Platte 3 erfaßt wird.

Zum Verschalen eines solchen Gefaches dienen eine Reihe derartiger mit Platten 3 versehene Tragestelle 4; sie werden übereinander angeordnet, wobei jeweils die Stützzunge 4a in den Schlitz 5a der Stützschiene 5 hakenförmig einrastet, so daß sie sich gegenseitig lösbar abstützen.

Damit die Traggestelle 4 mit den Platten 3 an den Balken 1, 2 des Gefaches festgehalten werden, sind Spannelemente 7 und 8 verschiebbar in dem Schlitz 5a der Stützschiene 5 geführt.

Die Spannelemente 7 und 8 sind hakenartig ausgebildet und dringen — wie das die Fig. 3 zeigt — in die Balken 1, 2 ein. Zum Spannen ist das eine Spannelement 8 mit Spannhebeln 9 in an sich bekannter Weise ausgerüstet.

Das Ausschäumen des Hohlraumes geschieht in der Weise, daß zunächst ein oder zwei Traggestelle 4 mit Platten 3 angesetzt werden, worauf das Ausschäumen bereits beginnt. Durch die Klebewirkung des Schaumstoffes haften dann auch die Platten 3 an dem Schaumstoff, so daß insoweit auch eine gewisse Haltewirkung für die Traggestelle 4 geschaffen ist.

Nach dem Aushärten des Schaumstoffes werden die Traggestelle 4 von den Platten 3 abgenommen, so daß nur noch die Platten 3 am Gefach verbleiben, die dann gegebenenfalls verputzt werden.

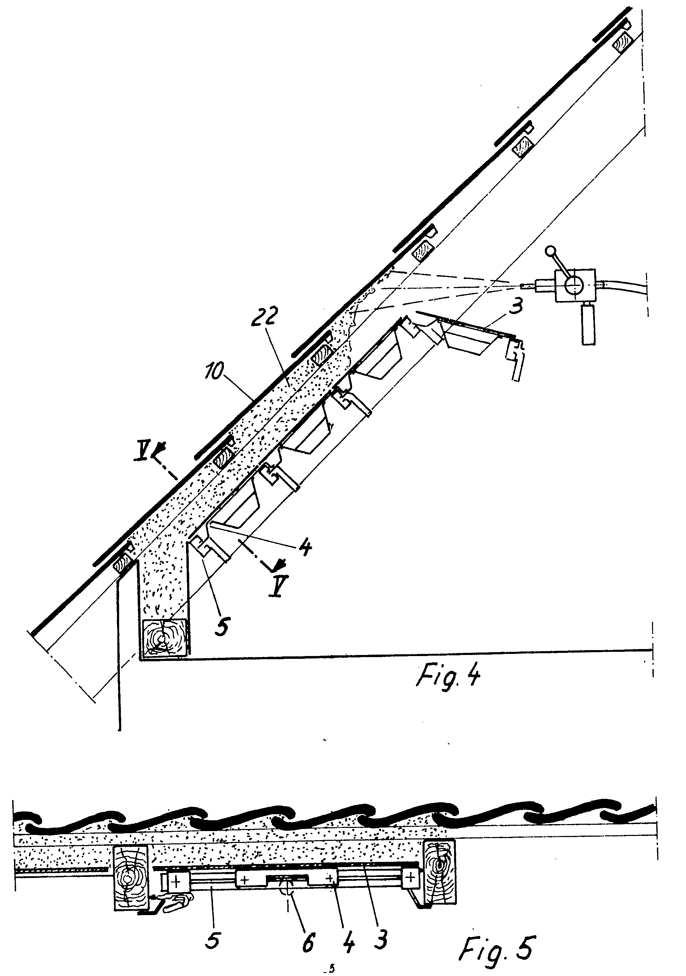

Die Fig. 4 zeigt ein Anwendungsbeispiel beim Ausschäumen eines Innendaches 10. Auch dort werden die Traggestelle 4 in der gleichen Weise übereinandergesetzt, wie das in den Fig. 1 bis 3 beschrieben worden ist.

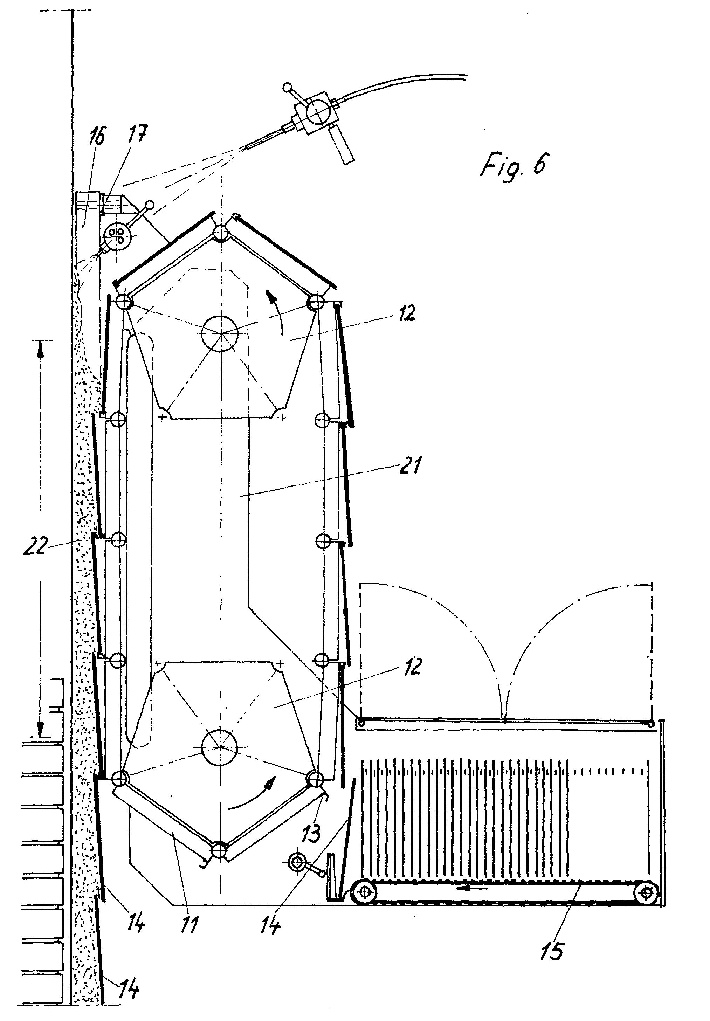

In der Fig. 6 ist eine andere Ausführungsform dargestellt. Diese Vorrichtung eignet sich zum Verschalen großer, insbesondere hoher Außenwände. Dabei sind mehrere Traggestelle 11 nach Art einer Kette miteinander verbunden, wobei die so gebildete Kette über Umlenkräder 12 geführt ist, so daß ein Kettengestell 21 entsteht. Jedes Traggestell 11 ist dabei mit Klemm-Mitteln, zum Beispiel in Form einer Klemmschiene 13 versehen, in die die Platten 14 einsetzbar sind.

Nach der dargestellten Ausführungsform sind die einzusetzenden Platten 14 auf einem Transportband 15 angeordnet. Beim Heben des Kettengestelles 21 erfolgt mithin das Übereinandersetzen der Platten 14 an der zu verschalenden Außenwand. Im einzelnen wird dabei so gearbeitet, daß zunächst einige Platten 14 in dieser Weise angeordnet werden, wobei zugleich Schaumstoff 22 eingefüllt wird. Nach einer gewissen Zeit, nachdem der Schaumstoff eine gewisse Starre erreicht hat, bleiben die Platten 14 selbst am Schaumstoff haften, so daß dann weiter in der Weise gearbeitet werden kann, daß das Kettengestell 21 kontinuierlich angehoben wird, was zur Folge hat, daß weitere Platten 14 an die Außenwand gelangen.

Zur seitlichen Begrenzung des durch die Platten 14 gebildeten Hohlraumes dient je ein Band 16, das über Umlenkrollen 17 geführt ist und dessen Ebene senkrecht zur Plattenebene steht. Das Material eines solchen Bandes 16 ist so gewählt, daß der Schaumstoff an dem Band nicht haften bleibt. Dieses Band 16 mit den Umlenkrollen 17 ist mit am Kettengestell 21 befestigt.

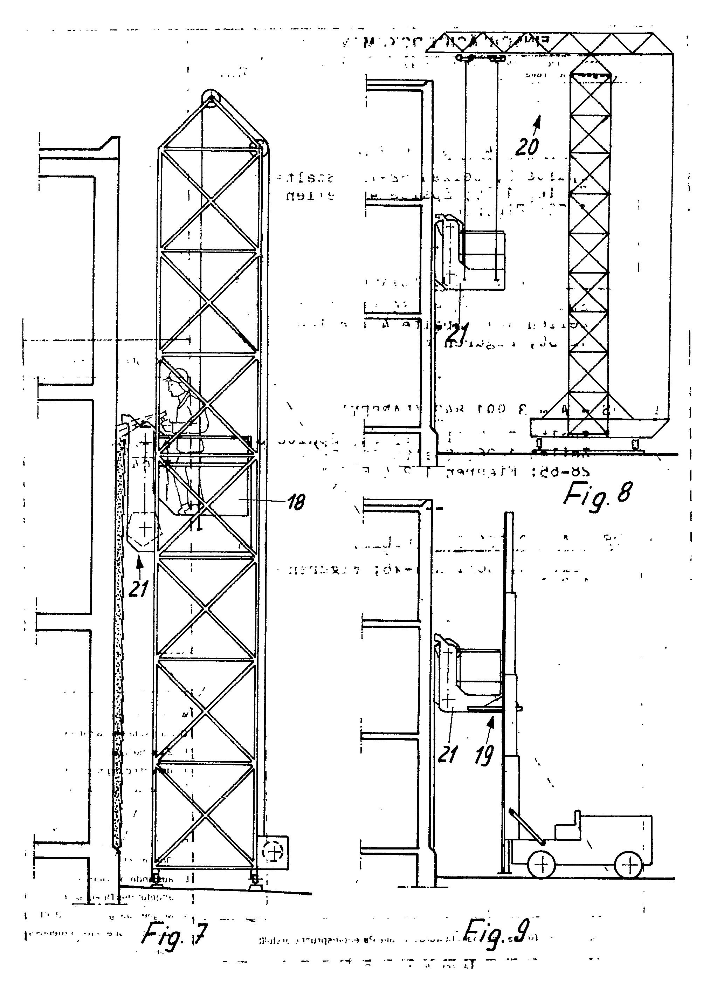

Das Kettengestell 21 selbst ist heb- und senkbar ausgebildet, was beispielsweise dadurch geschehen kann, daß das Kettengestell 21 an einer Hebebühne 18 angebracht ist, wie das in der Fig. 7 dargestellt ist, oder an einer Hubvorrichtung 19, wie es die Fig. 9 zeigt, oder an einem Kran 20, wie das in der Fig. 8 dargestellt ist.

## Patentansprüche

1. Vorrichtung zum bleibenden Verschalen von Flächen, insbesondere von Wänden oder Innendachflächen von Gebäuden, mit Platten zum Zwecke der Isolation mit Schaumstoff, dadurch gekennzeichnet, daß sie aus einer Reihe von Traggestellen (4, 11) besteht, an denen jeweils eine Platte (3, 14) festlegbar ist und die Traggestelle (4, 11) miteinander sich gegenseitig abstützend gelenkig verbunden sind.

2. Vorrichtung nach Anspruch 1, dadurch gekennzeichnet, daß die Traggestelle (4) lösbar miteinander verbunden sind.

3. Vorrichtung nach Anspruch 1 oder 2, dadurch gekennzeichnet, daß jedes Traggestell (4) an einer Seite eine Stützschiene (5) und an der gegenüberliegenden Seite eine Stützzunge (4a) aufweist und daß bei übereinander angeordneten Traggestellen (4) jeweils die Stützzunge (4a) in die Stützschiene (5) des nächsten Traggestelles (4) eingreift.

4. Vorrichtung nach Anspruch 3, dadurch gekennzeichnet, daß die Stützschiene (5) mit einem Schlitz (5a) versehen ist, in den die Stützzunge (4a) eingreift.

5. Vorrichtung nach Anspruch 3, dadurch gekennzeichnet, daß an der Stützschiene (5) seitliche Spannelemente (7, 8) verschiebbar geführt sind.

6. Vorrichtung nach Anspruch 1, dadurch gekennzeichnet, daß die Traggestelle (11) nach Art einer Kette gelenkig miteinander verbunden sind und die Kette über Umlenkräder (12) unter Bildung eines Kettengestells (21) geführt ist und daß das Traggestell (11) Klemm-Mittel od. dgl. aufweist, in die die Platten (14) einsetzbar sind.

7. Vorrichtung nach Anspruch 6, dadurch gekennzeichnet, daß zum Zwecke der seitlichen Begrenzung des durch die Platten (14) gebildeten Hohlraumes beiderseits ein Band (16) vorgesehen ist, das über Umlenkrollen (17) geführt ist und dessen Ebene senkrecht zur Plattenebene steht.

8. Vorrichtung nach Anspruch 6 oder 7, dadurch gekennzeichnet, daß das Kettengestell (21) heb- und senkbar ausgebildet ist.

9. Vorrichtung nach Anspruch 8, dadurch gekennzeichnet, daß das Kettengestellt (21) an einer Hebebühne (18) od. dgl. angebracht ist.

## Claims

1. Device for the permanent panelling of surfaces, especially of walls or internal roof surfaces of buildings, with plates for the purpose of insulation with foam material, characterised thereby, that it consists of a series of carrier frames (4, 11), against each of which a respective plate (3, 14) is locatable, and the carrier frames (4, 11) are articulatedly connected one with the other in mutually supporting manner.

2. Device according to claim 1, characterised thereby, that the farrier frames (4) are detachebly connected one with the other.

3. Device according to claim 1 or 2, chracterised thereby, that each carrier frame (4) displays a support rail (5) on one side and a support tongue (4a) on the oppositely disposed side and that with the carrier frames (4) arranged one above the other, the support tongue (4a) each time angages into the support rail (5) of the next carrier frame (4).

4. Dervice according to claim 3, characterised thereby, that the support rail (5) is provided with a slot (5a), into which the support tongue (4a) engages.

5. Device according to claim 3, characterised thereby, that lateral tightening elements (7, 8) are guided displaceably on the support rail (5).

6. Dervice according to claim 1, characterised thereby, that the carrier frames (11) are articulatedly connected one with the other in the manner of a chain and the chain is guided over deflecting wheels (12) while forming a chain frame (21) and that the carrier frame (11) displays clamping means or the like, into which the plates (14) are insertable.

7. Device according to claim 6, characterised thereby, that a belt (16) which is guided over deflecting rollers (17) and the plane of which stands perpendicularly to the plane of the plates, is provided at both sides for the purpose of the lateral limitation of the hollow space formed by the plates (14).

8. Device according to claim 6 or 7, characterised thereby, that the chain frame (21) is constructed to be raisable and lowerable.

9. Device according to claim 8, characterised thereby, that the chain frame (21) is mounted on a lifting platform (18) or the like.

**Revendications**

1. Dispositif pour le coffrage permanent, en particulier des murs ou des pans de comble intérieurs des bâtiments, avec des plaques, en vue de l'isolation avec de la mousse, caractérisé en ce qu'il consiste en une série de cadres porteurs (4, 11), sur chacun desquels une plaque (3, 14) est fixable, et

en ce que les cadres porteurs (4, 11) sont reliés l'un à l'autre en s'appuyant mutuellement.

2. Dispositif suivant la revendication 1, caractérisé en ce que les cadres porteurs (4) sont reliés l'un à l'autre de telle sorte qu'ils sont détachables.

3. Dispositif suivant l'une ou l'autre des revendications 1 et 2, caractérisé
en ce que chague cadre porteur (4) présente, d'un côté, un rail d'appui (5) et, du côté opposé, une languette d'appui (4a), et
en ce que chaque languette d'appui (4a) s'engrène dans le le rail d'appui (5) du cadre porteur (4) le plus voisin, les cadres porteurs (4) étant disposés l'un au-dessus de l'autre.

4. Dispositif suivant la revendication 3, caractérisé en ce que le rail d'appui (5) est muni d'une fente (5a) dans laquelle s'engrène la languette d'appui (4a).

5. Dispositif suivant la revendication 3, caractérisé en ce que des éléments de serrage latéraux (7, 8) sont guidés et sont déplaçables sur le rail d'appui (5).

6. Dispositif suivant la revendication 1, caractérisé
en ce que les cadres porteurs (11) sont reliés l'un à l'autre à articulation à la manière d'une chaîne,
en ce que la chaîne est guidée par l'intermédiaire de roues de renvoi (12) en formant un cadre à chaîne (21), et
en ce que le cadre porteur (11) présente des moyens de serrage ou moyens analoguee, dans lesquels les plaques (14) sot insérables.

7. Dispositiv suivant la revendication 6, caractérisé en ce qu'il est prévu, en vue de la délimitation latérale de l'espace creux formé par la plaques (14), des deux côtés, une bande (16) qui est guidée par l'intermédiaire de galets de guidage (17) et dont le plan se situe + perpendiculairement par rapport au plan des plaques.

8. Dispositif suivant l'une ou l'autre des revendications 6 et 7, caractérisé en ce que le cadre à chaîne (21) est constitué de telle sorte qu'il peut être élevé et abaissé.

9. Dispositiv suivant la revendaction 8, caractérisé en ce que le cadre à chaîne (21) est disposé sur une plateforme de levage (18) ou analogue.

0 007 975

Fig. 2

Fig. 1

Fig. 3

5

Fig. 4

Fig. 5

Fig. 6

Fig. 7

Fig. 8

Fig. 9